Europäisches Patentamt

European Patent Office

Office européen des brevets

(11) Veröffentlichungsnummer : **0 021 448**
**B1**

(12) ## EUROPÄISCHE PATENTSCHRIFT

(45) Veröffentlichungstag der Patentschrift :
05.01.83

(51) Int. Cl.³ : **B 23 D 47/02**, B 27 B 5/16

(21) Anmeldenummer : **80103677.3**

(22) Anmeldetag : **28.06.80**

(54) Spanabhebende Heimwerker-Werkzeugmaschine, insbesondere Kreissäge.

(30) Priorität : 03.07.79 DE 2926801

(43) Veröffentlichungstag der Anmeldung :
07.01.81 Patentblatt 81/01

(45) Bekanntmachung des Hinweises auf die Patenterteilung : 05.01.83 Patentblatt 83/01

(84) Benannte Vertragsstaaten :
AT BE FR IT NL

(56) Entgegenhaltungen :
AT B 70 896
DE A 1 453 033
DE A 2 617 800
DE A 2 720 211
DE B 2 630 453
DE U 1 882 712
DE U 1 890 790
DE U 1 915 498
DE U 1 924 394
DE U 7 226 393
DE U 7 604 062
FR A 1 004 929

(73) Patentinhaber : **Alois Kober KG, Maschinenfabrik**
**Ichenhauserstrasse 14**
**D-8871 Kötz 2 (DE)**

(72) Erfinder : **Kober, Kurt**
**Am Sandberg**
**D-8871 Kötz 1 (DE)**
Erfinder : **Unterstab, Roland**
**Offingerstrasse 23**
**D-8871 Schnuttenbach (DE)**

(74) Vertreter : **Ernicke, Hans-Dieter, Dipl.-Ing.**
**Schwibbogenplatz 2b**
**D-8900 Augsburg (DE)**

Spanabhebende Heimwerker-Werkzeugmaschine, insbesondere Kreissäge

Die Erfindung bezieht sich auf eine spanabhebende Heimwerkerwerkzeugmaschine, insbesondere Kreissäge, umfassend ein mit dem spanabhebenden Aggregat verbundenes Gestell mit einer Arbeitsfläche und Stützfüßen, die ungefähr im Bereich ihrer halben Höhe geteilt ausgebildet sind, wobei die beiden Teile jedes Stützfußes aneinander geführt und miteinander verschraubt sind, und wobei die mit der Arbeitsfläche verbundenen oberen Stützfußteile paarweise durch je eine Längstraverse miteinander verbunden sind. Eine solche Anordnung ist dem DE-U-18 90-790 als bekannt zu entnehmen, bei dem die aus Vierkantstahlrohr gebildeten Stützfußteile ineinander geführt und nach Art einer Rohrschellenverbindung miteinander verklemmt sind. Auf diese Weise soll das Problem gelöst werden, die Stützfüße den Unebenheiten des Geländes anzupassen.

Durch die AT-B-70 896 ist ein zweiteiliger Beschlag für umlegbare Tischbeine bekannt. Jeder Beschlag hat Winkelform und ist an den ihm zugeordneten Teil, nämlich Tischzarge und Tischbein, angeschraubt. In der Standstellung greift ein Zapfen des einen Beschlages in ein Langloch des anderen Beschlages ein, außerdem sind ineinandergreifende Gesperre bei beiden Beschlagteilen vorgesehen. Um das Tischbein zu verschwenken, müssen die Gesperre voneinander gelöst und der Zapfen im Langloch verschoben werden. Eine solche Anordnung würde für eine Werkzeugmaschine nicht anwendbar sein, weil sie hinsichtlich der unterschiedlichen Belastungen keinen sicheren Stand vermittelt.

Bei Heimwerkermaschinen besteht aber nun das Problem, die Lagerungs- und Versandkosten minimal zu gestalten. Aus diesem Grunde sind die Bauteile dieser Maschinen lösbar miteinander verbunden, so daß sie im demontierten Zustand in geringvolumigen Kartons oder sonstigen Verpackungsmitteln zum Versand gebracht werden können. Aus dem gleichen Grunde sind Heimwerkermaschinen im verpackten und demontierten Zustand unter Inanspruchnahme eines geringen Raumbedarfes übereinander stapelbar.

Die Schwierigkeit liegt nun darin, daß der Käufer gezwungen ist, die Heimwerkermaschine selbst zu montieren. Wenngleich die Konstrutionen so gestaltet sind, daß Fehlmontagen praktisch ausgeschlossen sind, bereitet es den Käufern doch erhebliche Mühe, die einzelnen Bauteile rasch zusammenzusetzen und Antrieb und Werkzeug richtig zu justieren sowie das Gestell so fest zu verschrauben, daß ein einwandfreier Stand gewährleistet ist. Dabei muß bedacht werden, daß der Motorblock und die Arbeitsplatte ein erhebliches Gewicht besitzen, was die Montage durch nur eine Person erschwert.

Der Erfindung liegt daher die Aufgabe zugrunde, eine Heimwerker-Werkzeugmaschine, insbesondere Kreissäge so zu gestalten, daß einerseits der Vorteil der geringvolumigen Verpackung gewahrt und andererseits die Montage der einzelnen Bauteile auf ein Minimum unter Vermeidung der geschilderten Nachteile gemindert wird.

Ausgehend von der eingangs erwähnten bekannten Anordnung einer Heimwerker-Werkzeugmaschine besteht das Wesen der Erfindung darin, daß die oberen und unteren Stützfußteile L-förmigen Querschnitt haben und an ihrer Verbindungsstelle je eine Schraube in den beiden Schenkeln des L-Querschnittes vorgesehen ist, daß zwei untere Teile der Stützfüße durch eine im rechten Winkel zur Längstraverse stehende Quertraverse miteinander verbunden und gemeinsam um je die zur Quertraverse parallele Schraube um etwa 90° einwärts abklappbar sind, wobei diese zur Quertraverse parallelen Schrauben in je einen sich im unteren Teil des Stützfußes längs diesem erstreckendem Langloch geführt sind.

Die erfindungsgemäße Anordnung der Heimwerkermaschine macht es möglich, das Antriebsaggregat für das Werkzeug herstellungsseitig schon fest mit dem oberen Teil des Gestelles zu verbinden und in diesem Zustand zum Versand zu bringen, wobei die Steifigkeit des oberen Gestellteiles fabrikseitig gesichert ist. Die unteren Teile der Stützfüße können hingegen für den Versand um die geschilderten Achsen einwärts eingeschwenkt werden, so daß deren Montage keine Problematik mehr aufweist. Hierbei empfiehlt es sich, die Trennungsebene zwischen den oberen und unteren Teilen der Stützfüße so zu legen, daß die nach unten vorkragenden Teile des Antriebsaggregates diese Trennungsebene nach unten nicht überragen. Die sich aus der Teilung der Stützfüße ergebende, allerdings nur scheinbare Minderung der Standfestigkeit ist in der Praxis nicht gegeben, weil durch die erfindungsgemäße Lage der Längs- und Quertraversen und durch geeignete Verschraubungs- und Zentrierungsmittel die gleiche Standfestigkeit wie bei ungeteilten Stützfüßen erreichbar ist.

Zu diesem Zweck ist bei einer Ausgestaltung der Erfindung vorgesehen, daß der einzelnen Schraube ineinandergreifende Wandbereiche der Schenkel, beispielsweise in eine Ausstanzung der einen Wand eintauchende Ausprägung der anderen Wand, benachbart sind.

Auf diese Weise wird der Vorteil erzielt, daß je Wand der Stützfüße nur eine Schraube verwendet zu werden braucht, ohne daß die Gefahr der Lockerung der Schrauben und des Maschinenstandes besteht, weil eine formschlüssige und alle Kräfte aufnehmende Zentrierung der Stützfußteile erreicht wird.

Im Rahmen einer Ausgestaltung der Erfindung ist vorgesehen, daß die Trennungsebene der Stützfüße sich unterhalb der von der Arbeitsplatte nach unten sich erstreckenden Aggregatteile befindet. Der Maschinenteil mit den oberen, vorzugsweise mit der Arbeitsplatte verschweißten Stützfußteilen kann dann als Block in den Verpackungsbehälter eingesetzt werden, ohne daß die unteren Stützfußteile im abgeschwenkten Zustand hinderlich sind.

Dadurch, daß die die Schwenkachse bildende Schraube in einem sich entsprechend der Längsachse der Stützfüße erstreckenden Langloch des abschwenkbaren Stützfußes geführt ist, ergibt sich die Möglichkeit, die unteren Stützfüße aus ihrer Verbindungsstellung, bei der die Wandungen unmittelbar aneinanderliegen, durch Ausnützen des Langlochspieles so weit von den oberen Stützfüßen zu lösen, daß sie mühelos verschwenkt werden können. In diesem Zusammenhang erweist es sich als zweckmäßig, wenn die sich überlappenden Stützfußbereiche stufenartig zum übrigen Stützfußbereich derart versetzt sind, daß die Außenflächen der Stützfüße bündig in einer Ebene liegen. Mit dieser Maßnahme wird nicht nur ein angenehmes äußeres Erscheinungsbild sondern auch eine Stabilisierung der Stützfüße im festgeschraubten Zustand erreicht.

Einzelheiten der Erfindung ergeben sich aus der Zeichnung. In ihr ist die Erfindung schematisch und beispielsweise dargestellt. Es zeigen :

Figur 1   eine Seitenansicht einer Kreissäge ;

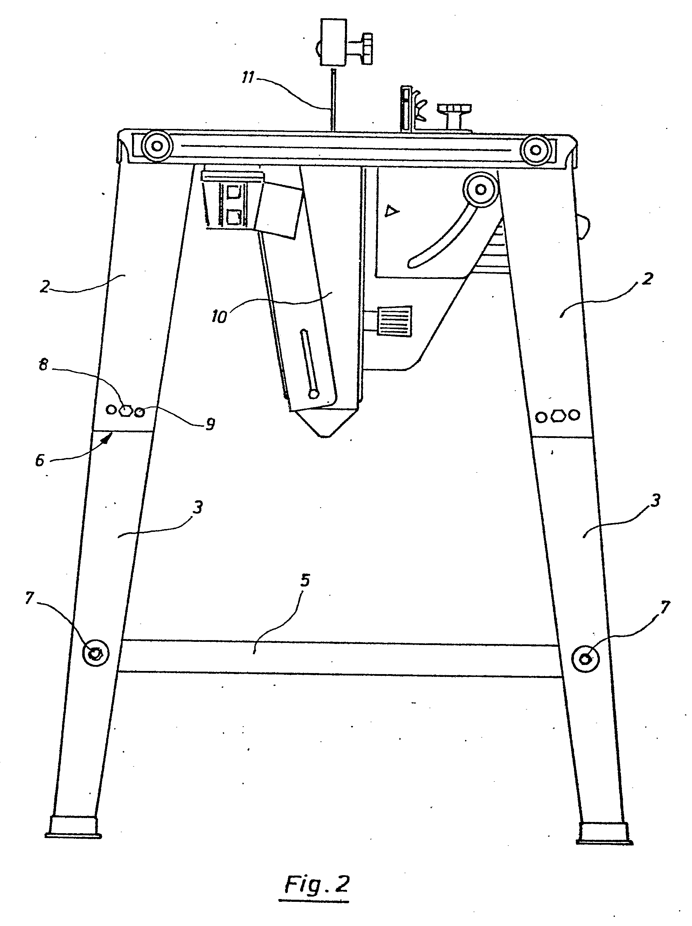

Figur 2   eine Vorderansicht der Kreissäge gemäß Figur 1 ;

Figur 3   einen Horizontalabschnitt nach der Linie III-III durch die Verschraubung gemäß Figur 1 ;

Figur 4   eine Seitenansicht der Kreissäge nach Figur 1 mit abgeschwenkten Stützfüßen und

Figur 5   eine Untersicht der Kreissäge nach Figur 2 mit abgeschwenkten Stützfüßen.

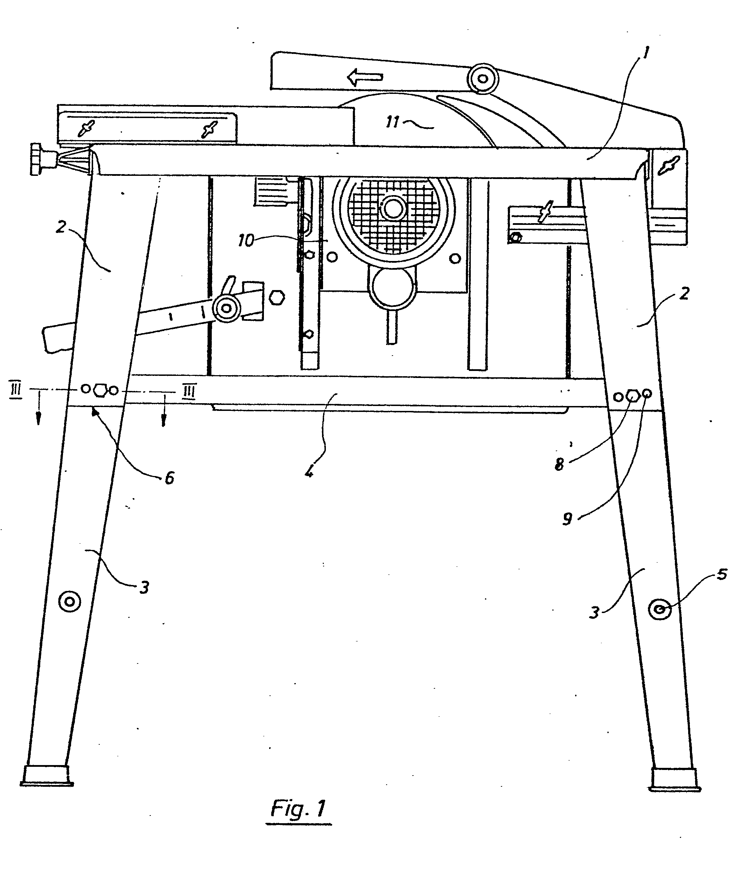

Beim Ausführungsbeispiel der Figur 1 ist in üblicher Weise eine Arbeitsplatte 1 mit vier Stützfüßen 2,3 verbunden, die sich nach unten schräg auswärts erstrecken. Die Stützfüße 2,3 sind etwa auf halber Höhe geteilt und miteinander verschraubt. Die Trennebene ist mit 6 bezeichnet. Je zwei obere Teile 2 der Stützfüße sind in einer Dimension durch Längstraversen 4 miteinander verbunden. Alle oberen Teile 2 der Stützfüße können mit der Arbitsplatte 1 auch eine körperliche Einheit, beispielsweise in Schweiß- oder Gußkonstruktion, bilden.

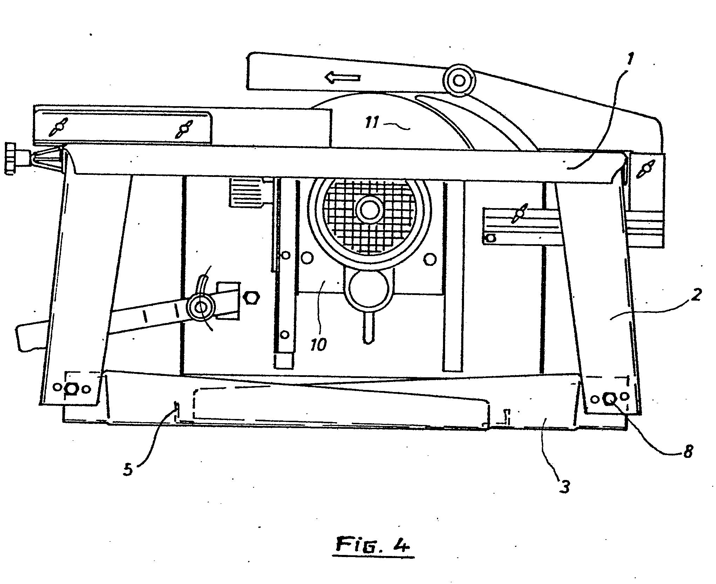

Je zwei Stützfußunterteile 3 sind durch rechtwinkelig zu den Längstraversen 4 sich erstreckenden Quertraversen 5 miteinander versteift und mit 7 ist die dazugehörige Verschraubung schematisch angedeutet. Diese Unterteile 3 der Stützfüße sind um eine parallel zur Quertraverse 5 sich erstreckende Achse nach innen schwenkbar angeordnet, so daß sie beim Versand der Heimwerkermaschine in den Raum unterhalb der Arbeitsplatte 1 gegen die Längstraversen 4 aus Platzersparnisgründen verschwenkt werden können (Figur 4). Die Gelenkkonstruktion kann dabei so gewählt werden, daß die Stützfußunterteile 3 im angeschraubten, aber lockeren Zustand verbleiben können. Es ist aber auch möglich, die Sützfußunterteile 3 abzuschrauben und auf den Boden des Verpackungsmittels, z.B. Kartons, zu legen und das Gestell mit den daran befindlichen Sützfußoberteilen 2 darauf zu setzen.

Der Motorblock 10 kann bei dieser Konstruktion im festmontierten Zustand an der Arbeitsplatte 1 verbleiben. Der Käufer muß daher nicht dieses verhältnismäßig schwere Gebilde nach dem Auspacken der Maschine montieren. Das Sägeblatt 11 oder ein sonstiges Werkzeug sowie die Zubehörteile können im demontierten Zustand dem Verpackungsmittel beigepackt werden. Es ist aber auch möglich, bei entsprechender Gestaltung des Verpackungsmittels dieses Teil im montierten Zustand zu versenden.

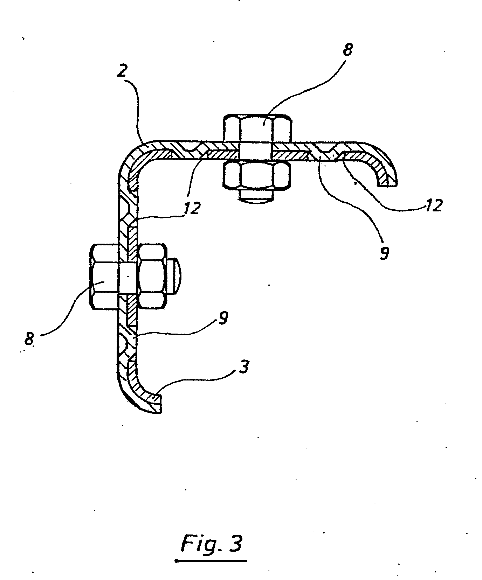

Wie die Figur 3 zeigt, sind die Stützfußteile 2,3 als Winkelprofile gestaltet, die im verschraubten Zustand mittels je einer Schraube 8 an jedem Schenkel gegeneinadergespannt sind. Jeder Schraube 8 benachbart befinden sich am einen Stützfußteil 2 zwei kegelstumpfförmige Ausprägungen 9, die in passende Ausstanzungen 12 des anderen Stützfußteiles 3 einrasten, dort eine Drehsperre bilden und eine feste Verspannung der Stützfußteile 2,3 bedingen. Die zur Längstraverse 4 parallele Schraube 8 wird bei der Demontage entfernt, die andere, zur Quertraverse 5 parallel liegende Schraube dient nach ihrer Lockerung als Schwenkachse für das einzelne Stützfußpaar 3.

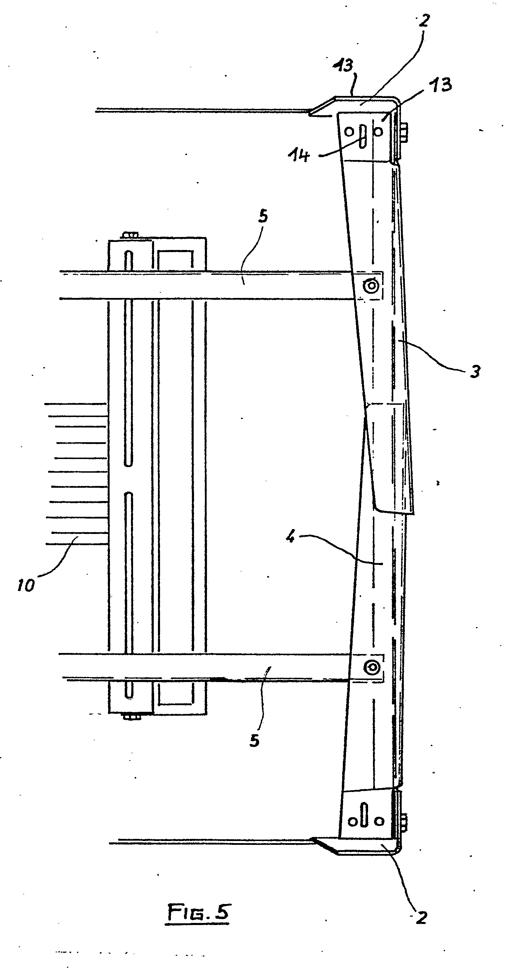

Die einander überlappenden Bereiche 13 der Stützfüße 2,3 sind zu den angrenzenden Bereichen der Stützfüße gemäß Figur 5 stufenartig derart versetzt, daß die Außenflächen der Stützfüße im verschraubten Zustand bündig in einer Ebene liegen. Die Durchgangsbohrung für die Schraube 8 ist als Langloch 14 ausgebildet, das sich in Längsrichtung der Stützfüße 2,3 erstreckt. Dadurch ist es möglich, die gemäß Figur 3 aneinanderliegenden Stützfußschenkel nach Entfernen der einen Schraube und Lockern der anderen Schraube 8 etwas voneinander zu distanzieren und dann wegzuschwenken.

Wie aus den Figuren 4 und 5 besonders deutlich hervorgeht, lassen sich die unteren Stützfüße 3 bis an die Längstraversen 4 heranklappen, was durch die L-Profilform der Füße 3 und Traversen 4 begünstigt wird. Zufolge der Lockerung der Schrauben 8 ist es auch möglich, die Stützfüße 3 in der abgeklappten Stellung einander umgreifend einzuschwenken, obwohl die Länge des unteren Stützfußteiles 3 größer als die halbe Breite der Kreissäge ist.

**Ansprüche**

1. Spanabhebende Heimwerker-Werkzeugmaschine, insbesondere Kreissäge, umfassend ein mit dem spanabhebenden Aggregat (10, 11) verbundenes Gestell mit einer Arbeitsfläche (1) und Stützfüßen (2, 3), die ungefähr im Bereich ihrer halben Höhe geteilt ausgebildet sind, wobei die beiden Teile (2, 3) jedes Stützfußes aneinander geführt und miteinander verschraubt sind, und wobei die mit der Arbeitsfläche (1) verbundenen oberen Stützfußteile (2) paarweise durch je eine Längstraverse (4) miteinander verbunden sind, dadurch gekennzeichnet, daß die oberen und unteren Stützfußteile (2, 3) L-förmigen Querschnitt haben und an ihrer Verbindungsstelle je eine Schraube (8) in den beiden Schenkeln des L-Querschnitts vorgesehen ist, daß je zwei untere Teile (3) der Stützfüße durch eine im rechten Winkel zur Längstraverse (4) stehende Quertraverse (5) miteinander verbunden sind und gemeinsam um je die zur Quertraverse (5) parallele Schraube (8) um etwa 90° einwärts abklappbar sind, wobei diese zur Quertraverse (5) parallelen Schrauben (8) in je einem sich im unteren Teil (3) des Stützfußes längs diesem erstreckenden Langloch (14) geführt sind.

2. Werkzeugmaschine nach Anspruch 1, dadurch gekennzeichnet, daß der einzelnen Schraube (8) ineinandergreifende Wandbereiche (9) der Schenkel, beispielsweise in eine Ausstanzung (12) der einen Wand eintauchende Ausprägung (9) der anderen Wand, benachbart sind.

3. Werkzeugmaschine nach Anspruch 1 oder 2, dadurch gekennzeichnet, daß die Trennungsebene (6) der Stützfüße (2, 3) sich unterhalb der von der Arbeitsplatte (1) nach unten sich erstreckenden Aggregatteile (10) befindet.

4. Werkzeugmaschine nach Anspruch 1 oder folgende, dadurch gekennzeichnet, daß die sich überlappenden Stützfußbereiche stufenartig zum übrigen Stützfußbereich derart versetzt sind, daß die Außenflächen der Stützfüße bündig in einer Ebene liegen.

5. Werkzeugmaschine nach Anspruch 1 oder folgende, dadurch gekennzeichnet, daß die Traversen (4, 5) aus L-Profilen bestehen.

## Claims

1. Metal-cutting machine tool, especially a circular saw, comprising a frame joined to the metal-cutting unit (10, 11) with a work-surface (1) and supporting feet (2, 3) which are split roughly in the region of their semi-height, wherein both parts (2, 3) of each supporting foot are brought together and bolted to one another, and wherein the upper supporting feet parts (2) connected to the work-surface (1) are joined in pairs each by a longitudinal cross bar (4), characterised in that the upper and lower supporting feet parts (2, 3) have an L-shaped cross-section and at their connecting point a bolt (8) is provided in both arms of the L-section, and in that every two lower parts (3) of the supporting feet are connected to one another by a transverse cross bar (5) at right angles to the longitudinal cross bar (4) and can be folded inwardly by about 90° around the bolt (8) parallel to the transverse cross bar (5), wherein these bolts (8) parallel to the transverse cross bar (5) are guided in a longitudinal aperture (14) extending in the lower part (3) of the supporting feet.

2. Machine tool according to Claim 1, characterised in that interengaging wall regions (9) of the arms, for example a pressed-in section (9) of one wall sitting in a punched out area (12) of the other wall, are adjacent to the individual bolts (8).

3. Machine tool according to Claim 1 or 2, characterised in that the separating plane (6) of the supporting feet (2,3) is located beneath the unit parts (10) extending downwardly from the work-surface (1).

4. Machine tool according to Claim 1 or the following claims, characterised in that the overlapping supporting feet regions are staggered with respect to the remaining supporting foot region in such a way that the external surfaces of the supporting feet lie flush in one plane.

5. Machine tool according to Claim 1 or the following claims, characterised in that the cross bars (4, 5) consist of L-shaped profiles.

## Revendications

1. Machine-outil par enlèvement de copeaux pour travaux à domicile, notamment scie circulaire, comprenant un bâti, qui est relié à l'ensemble (10, 11) enlevant des copeaux et qui a une surface (1) de travail et des jambes (2, 3) d'appui partagées à peu près à mi-hauteur, les deux parties (2, 3) de chaque jambe d'appui étant guidées l'une contre l'autre et vissées ensemble, et les parties (2) supérieures des jambes d'appui, reliées à la surface (1) de travail, étant reliées entre elles par paire respectivement par une longrine (4), caractérisée en ce que les parties (2, 3) supérieures et inférieures des jambes d'appui ont une section droite en forme de L et il est prévu à leur emplacement de liaison respectivement une vis (8) dans les deux ailes de la section droite en L, en ce que les parties (3) inférieures des jambes d'appui sont reliées deux à deux par une traverse (5) à angle droit avec la longrine (4) et peuvent être rabattues ensemble vers l'intérieur de 90° environ autour de leur vis (8) parallèle à la traverse (5), ces vis (8) parallèles aux traverses (5) étant guidées respectivement dans un trou (14) oblong s'étendant dans la partie (3) inférieure de la jambe d'appui le long de celle-ci.

2. Machine-outil suivant la revendication 1, caractérisée en ce que les régions (9) de paroi des ailes qui s'emboîtent l'une dans l'autre, par exemple par une partie (9) repoussée de l'une des parois pénétrant dans une découpure (12) de l'autre paroi, sont adjacentes.

3. Machine-outil suivant la revendication 1 ou 2, caractérisée en ce que le plan (6) de séparation des jambes (2, 3) d'appui se trouve en-dessous de la partie (10) de l'ensemble s'étendant vers le bas depuis le plateau (1) de travail.

4. Machine-outil suivant la revendication 1 ou les suivantes, caractérisée en ce que les régions des jambes d'appui qui se recouvrent sont décalées à la manière d'un gradin par rapport à l'autre région de la jambe d'appui de façon que les surfaces extérieures des jambes d'appui affleurent dans un plan.

5. Machine-outil suivant la revendication 1 ou les suivantes, caractérisée en ce que les longrines et traverses (4, 5) sont constituées de profilés en L.

0 021 448

_Fig. 1_

Fig. 2

Fig. 3

Fig. 4

Fig. 5